# EUROPÄISCHE PATENTANMELDUNG

(11) **EP 1 033 282 A2**
(43) Veröffentlichungstag der Anmeldung: **06.09.2000**
(21) Anmeldenummer: 00100339.1
(22) Anmeldetag: 07.01.2000
(51) Int. Cl.: B60N 3/10

(54) **Haltevorrichtung für einen Getränkebehälter in einem Kraftwagen**

(30) Priorität: 02.03.1999 DE 19908959
(71) Anmelder: fischerwerke Artur Fischer GmbH & Co. KG, D-72178 Waldachtal (DE)
(72) Erfinder: Schaal, Falk, 72275 Alpirsbach (DE)

(57) **Zusammenfassung**

Die Erfindung betrifft eine Haltevorrichtung (10) für einen Getränkebehälter wie bspw. eine Tasse, einen Becher oder eine Getränkebüchse in einem Kraftwagen. Die Erfindung schlägt vor, die Haltevorrichtung (10) mit einer Kette (12) auszubilden, deren eines Endglied (18) verschiebbar geführt ist, so dass mit der Kette ein Bogen gebildet werden kann, in den der nicht dargestellte Getränkebehälter einstellbar ist.

## Beschreibung

Die Erfindung betrifft eine Haltevorrichtung für einen Getränkebehälter in einem Kraftwagen, wobei die Verwendungsmöglichkeiten der Haltevorrichtung nicht auf Kraftwagen beschränkt sind, sondern die Haltevorrichtung bspw. auch in Eisenbahnen oder Flugzeugen anbringbar ist. Getränkebehälter kann bspw. eine Tasse, ein Becher oder eine Getränkebüchse sein.

Derartige Haltevorrichtungen sind an sich bekannt. Die bekannten Haltevorrichtungen weisen einen schubladenartig ausziehbaren Schieber oder einen herausschwenkbaren oder versenkbaren Halter mit einer Einstellöffnung für einen Getränkebehälter auf. Die bekannten Haltevorrichtungen haben den Nachteil, dass sie einen großen Bauraum benötigen. Um den notwendigen Bauraum zu verkleinern ist schon vorgeschlagen worden, den Schieber oder Halter mehrteilig mit ineinander schwenkbaren Teilen auszubilden. Dies hat den Nachteil, dass die Haltevorrichtungen aufwendig und teuer werden und trotzdem noch einen großen Bauraum benötigen.

Der Erfindung liegt die Aufgabe zugrunde, eine Haltevorrichtung vorzuschlagen, die einen nur geringen Bauraum benötigt.

Diese Aufgabe wird erfindungsgemäß durch die Merkmale des Anspruchs 1 gelöst. Die erfindungsgemäße Haltevorrichtung weist eine Kette auf die in einer Gebrauchsstellung einen Bogen bildet und einen in die Haltevorrichtung eingestellten Getränkebehälter zumindest auf einem Teil seines Umfangs umschlingt. Wird die Haltevorrichtung nicht benötigt, kann die Kette bspw. gerade gezogen und versenkt werden, so dass sie aus dem Weg ist. In der Nichtgebrauchsstellung nimmt die Kette einen nur geringen Bauraum ein.

Auch ist es möglich, die Kette bei nicht gebrauchter Haltevorrichtung bspw. mäanderförmig und damit platzsparend zusammenzulegen und ggf. zu versenken. Die Glieder der Kette sind um Gliedachsen schwenkbar miteinander verbunden, d. h. die Glieder der Kette sind in einer insbesondere horizontalen Ebene schwenkbar, so dass die zu einem Bogen geformte Kette nicht herunterhängt, sondern in etwa horizontal von einer Innenverkleidung oder dgl. des Kraftwagens absteht. Die Erfindung hat den Vorteil, dass sie bei Nichtgebrauch einen nur geringen Bauraum benötigt. Zudem ist die Kette der erfindungsgemäßen Haltevorrichtung nicht nur gerade gestreckt, sondern auch bogen- oder mäanderförmig unterbringbar, wodurch die Haltevorrichtung sehr flexibel an die Form eines zur Verfügung stehenden Bauraums anpassbar ist. Die erfindungsgemäße Haltevorrichtung ist einfach in ihrem Aufbau und kostengünstig herstellbar. Sie hält einen eingestellten Getränkebehälter zuverlässig.

In bevorzugter Ausgestaltung weist die Erfindung eine Führung auf, mit der ein Glied, insbesondere ein Endglied der Kette, verschiebbar geführt ist. Ein anderes Endglied der Kette kann schwenkbar und ortsfest oder ebenfalls verschiebbar geführt sein. Die Führung dient dazu, einen Abstand der Endglieder der Kette zu verringern, um die Kette zu einem Bogen formen zu können, in den der Getränkebehälter einstellbar ist. Bei Nichtgebrauch werden die Endglieder durch Verschieben voneinander entfernt, wodurch die Kette gestreckt wird, so dass sie platzsparend untergebracht ist.

Bei einer Ausgestaltung der Erfindung ist ein Federelement oder eine Anzahl Federelemente vorgesehen, das/die die Glieder der Kette gegeneinander verschwenkt/verschwenken. Ein Federelement kann gemäß einer Ausgestaltung der Erfindung sich in Längsrichtung der Kette erstrecken, also bspw. als Draht- oder Blattfeder ausgebildet und an Gliedern der Kette befestigt sein. Einzelne Federelemente können an den Gliedachsen angeordnet sein und jeweils an benachbarten Gliedern angreifen. Durch das Federelement / die Federelemente kann sich die Kette selbsttätig zu dem gewünschten Bogen zum Einstellen des Getränkebehälters formen. In der Nichtgebrauchsstellung wird die Kette gegen die Kraft des Federelements / der Federelemente gestreckt und verriegelt oder in sonstiger Weise gehalten. Auch ist es umgekehrt möglich, die Kette durch das Federelement / die Federelemente in die gestreckte oder auch mäanderförmige Nichtgebrauchsstellung zu bewegen. Dazu kann das Federelement auch als Zug- oder Druckfeder ausgebildet sein und an dem geführten Endglied der Kette angreifen. In der Ausgestaltung, in der sich die Kette durch Federkraft selbsttätig streckt, eignet sich die erfindungsgemäße Haltevorrichtung auch zur Kofferraumbefestigung. Zum Befestigen eines Gegenstands wird die Kette gegen die Kraft des Federelements bspw. von einer Kofferraumwand weggezogen, der Gegenstand wird zwischen die Kofferraumwand und die Kette eingestellt und die Kette wieder losgelassen. Das Federelement bewegt die Kette in Anlage an den Gegenstand und klemmt diesen zwischen der Kofferraumwand und der Kette fest. Das Federelement / die Federelemente vereinfachen die Benutzung der erfindungsgemäßen Haltevorrichtung.

Bei einer Ausgestaltung der Erfindung ist eine Gleitschiene vorgesehen, die schwenkbar an einem Glied der Kette und mit Abstand davon schwenkbar an einer Führung, insbesondere an der Führung, mit der auch das Glied der Kette geführt ist, angebracht ist. Diese Gleitschiene unterstützt das Strecken der Kette beim Verbringen der Kette aus der gebogenen Gebrauchsstellung in eine gestreckte Nichtgebrauchsstellung. Wird die Kette nach Gebrauch durch eine Öffnung in einem Armaturenbrett oder dgl. eingeschoben, gelangt zunächst die schräg stehende Gleitschiene in Anlage an einem Rand der Öffnung. Die Gleitschiene drückt das Glied der Kette, mit dem die Gleitschiene schwenkbar verbunden ist, in Richtung der Führung und leitet dadurch die Streckung der Kette ein.

Bei einer Ausgestaltung der Erfindung sind Einstellschrägen an oberen, inneren Rändern der Glieder der Kette vorgesehen. Beim Einstellen eines Getränkebehälters in die Haltevorrichtung gleitet der Getränkebehälter an den Einstellschrägen entlang und wird dadurch beim Einstellen in die Haltevorrichtung in einen von der Kette gebildeten Bogen geführt. Des Weiteren paßt sich die Kette durch die Einstellschrägen an die Form des Getränkebehälters an.

Bei einer Ausgestaltung der Erfindung weist die Haltevorrichtung eine Auszieheinrichtung auf. Die Auszieheinrichtung kann beispielsweise eine in einem Armaturenbrett oder dgl. verschiebbar geführte Führungsschiene für das Endglied der Kette sein. Bei Nichtgebrauch wird die Kette an der Führungsschiene gestreckt und gemeinsam mit der Führungsschiene in das Armaturenbrett geschoben. Zum Strecken der Kette ist die bereits beschriebene Gleitschiene vorteilhaft, die bewirkt, dass die Kette durch das Einschieben der Führungsschiene in eine Öffnung im Armaturenbrett oder dgl. an die Führungsschiene gestreckt wird.

Eine Ausgestaltung der Erfindung sieht eine Stütze vor, auf der ein in die Haltevorrichtung eingestellter Getränkebehälter steht. Die Stütze kann fest bspw. als Absatz oder auch schwenkbar unterhalb der Kette vorgesehen sein.

Bei einer Ausgestaltung der Erfindung weist die Stütze ebenfalls eine Kette auf, die unterhalb der einen eingestellten Getränkebehälter umschlingenden Kette angebracht ist. Die die Stütze bildende Kette steht in der Gebrauchsstellung weniger weit vom Armaturenbrett, der Innenverkleidung oder dgl. ab als die den eingestellten Getränkebehälter umschlingende Kette, so dass die die Stütze bildende Kette sich innerhalb einer von der einen eingestellten Getränkebehälter umschlingenden Kette begrenzten Einstellfläche befindet. Die die Stütze bildende Kette kann ebenso wie die einen eingestellten Getränkebehälter umschlingende Kette mit einem Federelement oder einer Anzahl von Federelementen ausgebildet sein.

Bei einer Ausgestaltung der Erfindung ist vorgesehen, dass ein Glied der die Stütze bildenden Kette mit einem Glied der einen eingestellten Getränkebehälter umschlingenden Kette verbunden ist. Durch die Verbindung wird eine Bewegung der einen eingestellten Getränkebehälter umschlingenden Kette auf die die Stütze bildende Kette übertragen, so dass beide Ketten gemeinsam zu einem Bogen geformt oder gestreckt werden.

Zum Aufstellen eines in die Haltevorrichtung eingestellten Getränkebehälters können auch Glieder der den eingestellten Getränkebehälter umschlingenden Kette winkelförmig nach innen stehende oder schwenkbare Stützen aufweisen.

Bei einer Weiterbildung der Erfindung ist vorgesehen, dass das Federelement, welches sich in Längsrichtung der Kette erstreckt und an Gliedern der Kette angreift, zugleich auch die Stützen verschwenkt.

Bei einer Ausgestaltung der Erfindung ist ein Schwenkhebel als Stütze für einen in die Haltevorrichtung eingestellten Getränkebehälter vorgesehen. Der Schwenkhebel ist unterhalb der Kette um eine vertikale Achse schwenkbar an einer Innenverkleidung, dem Armaturenbrett oder dgl. eines Kraftwagens angebracht. Zum Gebrauch der Haltevorrichtung wird der Schwenkhebel von der Innenverkleidung, dem Armaturenbrett oder dgl. abstehend verschwenkt. Der Schwenkhebel bildet zugleich eine Bogenführung für ein freies Endglied der Kette, der Schwenkhebel führt das bspw. über einen vertikalen Stift mit ihm verbundene freie Endglied der Kette beim Verschwenken in einem Bogen in die Gebrauchsstellung.

Bei einer Ausgestaltung der Erfindung ist eine Feststelleinrichtung vorgesehen, mit dem das an der Führung geführte Glied der Kette an der Führung feststellbar ist. Die Feststelleinrichtung kann bspw. einen mit der Führung geführten, klemmenden oder rastenden und lösbaren Schieber aufweisen.

Die Erfindung wird nachfolgend anhand in der Zeichnung dargestellter Ausführungsbeispiele näher erläutert. Es zeigen:
- Figuren 1a - 1c: eine erfindungsgemäße Haltevorrichtung in verschiedenen Stellungen in perspektivischer Darstellung;
- Figuren 2a - 2c: die Haltevorrichtung aus Figur 1 in Seitenansicht;
- Figur 3: eine Einzelheitdarstellung der Haltevorrichtung aus Figur 1;
- Figuren 4a - 4c: eine zweite Ausführungsform einer erfindungsgemäßen Haltevorrichtung in verschiedenen Stellungen in perspektivischer Darstellung;
- Figuren 5a - 5c: die Haltevorrichtung aus Figur 4 in Seitenansicht;
- Figur 6: eine dritte Ausführungsform der erfindungsgemäßen Haltevorrichtung;
- Figur 7: einen Abschnitt einer Kette einer weiteren Ausführungsform der Erfindung;
- Figuren 8 und 9: zwei weitere Ausführungsformen einer erfindungsgemäßen Haltevorrichtung; und
- Figuren 10a und 10b: eine abgewandelte Ausführungsform der in Figuren 1 und 2 dargestellten Haltevorrichtung in Ansicht von oben.

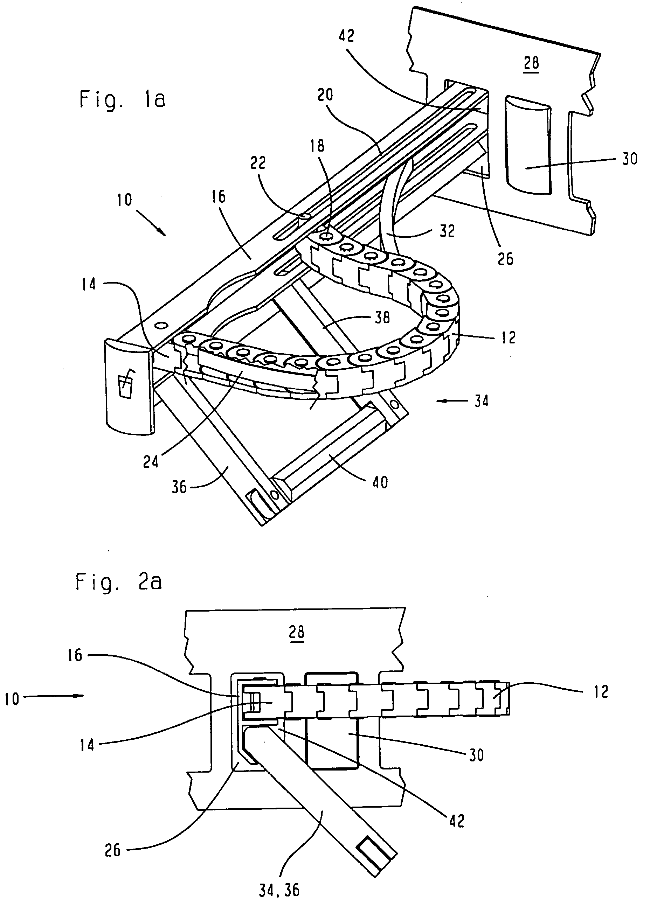

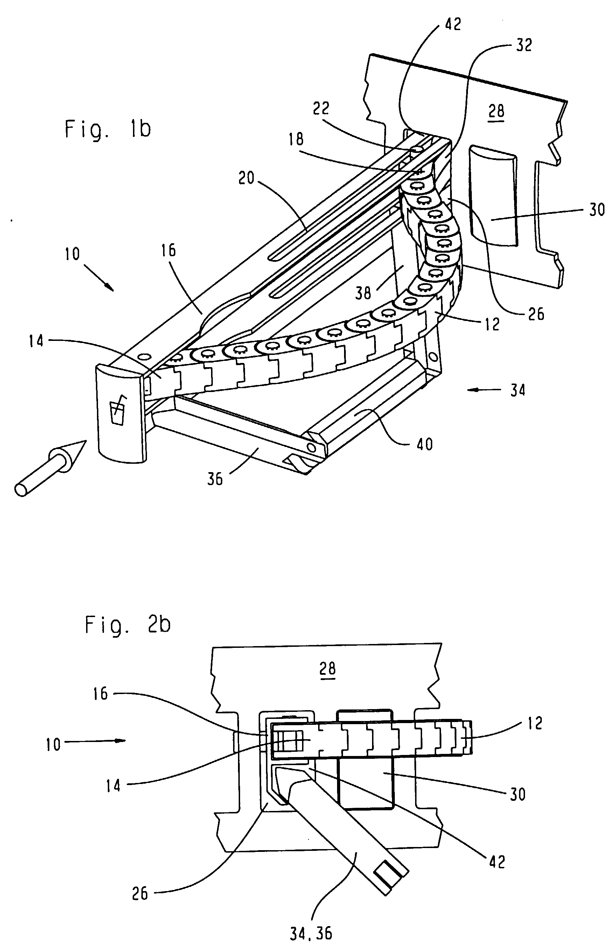

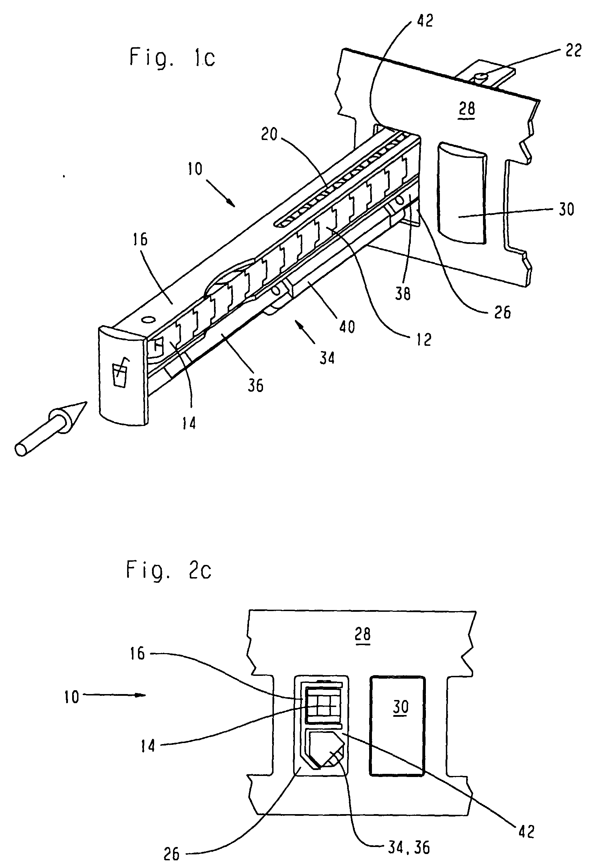

Die in Figuren 1 und 2 dargestellte, erfindungsgemäße Haltevorrichtung 10 weist eine Kette 12 auf, deren eines Endglied 14 unverschieblich und um eine vertikale Achse schwenkbar am Ende eines stangenförmigen Schiebers 16 befestigt ist. Ein anderes Endglied 18 der Kette 12 ist schwenk- und verschiebbar im Schieber 16 gelagert. Zu diesem Zweck ist der Schieber 16 mit in seiner Längsrichtung verlaufenden Führungsschlitzen 20 versehen, in die das Endglied 18 mit vertikal abstehenden Führungszapfen 22 eingreift. Die Glieder der Kette 12 sind um vertikale Achsen schwenkbar miteinander verbunden, so dass die Kette 12 in einer horizontalen Ebene bewegbar ist und nicht infolge der Schwerkraft nach unten hängt. Die Glieder der Kette 12 weisen ein kastenförmiges Hohlprofil auf, in dem über die Länge der Kette 12 eine Blattfeder 24 einliegt. Die Blattfeder 24 hat in entspanntem Zustand in etwa die Form eines Halbkreisbogens mit einer Biegung in Gegenrichtung an dem Ende der Blattfeder 24, welches in dem in den Führungsschlitzen 20 verschiebbaren Endglied 18 sowie einigen daran anschließenden Gliedern der Kette 12 einliegt. Die Blattfeder 24 bringt die Kette 12 in die in Figur 1a dargestellte, in Draufsicht U-förmige Bogenform, wobei der Bogen seitlich vom Schieber 16 absteht und an dem in den Führungsschlitzen 20 verschiebbaren Ende der Kette 12 in einen Gegenbogen übergeht.

Der Schieber 16 bildet eine Auszieheinrichtung der erfindungsgemäßen Haltevorrichtung 10. Der Schieber 16 ist verschiebbar in einer Öffnung 26 eines Armaturenbretts 28 eines Kraftwagens aufgenommen. Er wird vorzugsweise von einer nicht dargestellten Feder in die dargestellte Stellung aus dem Armaturenbrett 28 herausgeschoben, lässt sich gegen die Kraft der Feder in das Armaturenbrett 28 hineinschieben und wird dort von einer nicht dargestellten Verriegelungseinrichtung gehalten, die mit einer Entriegelungstaste 30 lösbar ist. Derartige Verriegelungseinrichtungen sind dem Fachmann in einer Vielzahl von Ausgestaltungen bekannt und, da sie nicht den eigentlichen Gegenstand der Erfindung bilden, der klaren Darstellbarkeit wegen nicht dargestellt.

An einem Glied der Kette 12, das Abstand von dem in der Führungsnut 20 des Schiebers 16 verschiebbaren Endglied 18 aufweist, ist eine gewölbte Gleitschiene 32 schwenkbar angebracht. Ein anderes Ende der Gleitschiene 32 liegt im Schieber 16 ein und ist in diesem verschiebbar.

Unterhalb der Kette 12 ist eine Stütze 34 am Schieber 16 angebracht, die drei um Achsen schwenkbar miteinander verbundene Hebel umfasst. Ein Endhebel 36 ist um eine Achse, die in einem Winkel von 45° zur Vertikalen steht, schwenkbar am Ende des Schiebers 16 angebracht. Ein anderer Endhebel 38 ist ebenfalls um eine Achse, die in einem Winkel von 45° zur Vertikalen steht, schwenkbar und in Längsrichtung des Schiebers 16 verschiebbar am Schieber 16 geführt. Dieser Endhebel 38 ist mit dem verschiebbaren Endglied 18 der Kette 12 verbunden, so dass sich das Endglied 18 und der Endhebel 38 gemeinsam in Längsrichtung des Schiebers 16 verschieben. Die beiden Endhebel 36, 38 sind über einen Zwischenhebel 40 gelenkig miteinander verbunden, der sich in der in Figuren 1a und 2a dargestellten Stellung der Haltevorrichtung 10 in etwa in einer Mitte unterhalb einer von der Kette 12 umrandeten Fläche befindet.

In der in Figuren 1a und 2a dargestellten Stellung der Haltevorrichtung 10 lässt sich ein nicht dargestellter Getränkebehälter, bspw. eine Tasse, ein Becher oder eine Getränkebüchse, in die Haltevorrichtung 10 einstellen, so dass der Getränkebehälter von der zu einem Bogen geformten Kette 12 und dem Schieber 16 umschlungen ist und auf dem Mittelhebel 40 der Stütze 34 aufsteht. Bei Nichtgebrauch wird der Schieber 16 in die Öffnung 26 im Armaturenbrett 28 eingeschoben. Beim Einschieben gelangt zunächst die Gleitschiene 32 in Anlage an einen Rand 42 der Öffnung 26 und wird von dem Rand 42 der Öffnung 26 zum Schieber 16 gedrückt. Dabei bewegt die Gleitschiene 32 das Glied der Kette 12, an welchem die Gleitschiene 32 schwenkbar befestigt ist, in Richtung des Schiebers 16, wie in Figur 1b zu sehen. Die Kette 12 wird dadurch gegen die Kraft der Blattfeder 24 in Richtung des Schiebers 16 gedrückt, der von der Kette 12 gebildete Bogen wird flacher und die Kette 12 wird gestreckt. Da die Glieder der Kette 12 von dem Glied, mit dem die Gleitschiene 32 schwenkbar verbunden ist, bis zum verschiebbaren Endglied 18 in Richtung der Öffnung 26 im Armaturenbrett 28 gewölbt sind, verschiebt sich das Endglied 18 in den Führungsnuten 20 in Richtung der Öffnung 26, wenn die Kette 12 von der Gleitschiene 32 in Richtung des Schiebers 16 gedrückt wird.

Beim weiteren Einschieben des Schiebers 16 wird die Kette 12 vollständig in den Schieber 16 hineingedrückt und gestreckt, wie in Figuren 1c und 2c sichtbar. Da ein Endhebel 38 der Stütze 34 mit dem verschiebbaren Endglied 18 der Kette 12 verbunden ist, wird durch das Strecken der Kette 12 auch die die drei Schwenkhebel 36, 38, 40 umfassende Stütze 34 gestreckt und in Anlage an den Schieber 16 gebracht, wie in Figuren 1b, 1c und 2c erkennbar. In der Nichtgebrauchsstellung hat die Haltevorrichtung 10 nur den kleinen Querschnitt des Schiebers 16, sie benötigt nur wenig Bauraum.

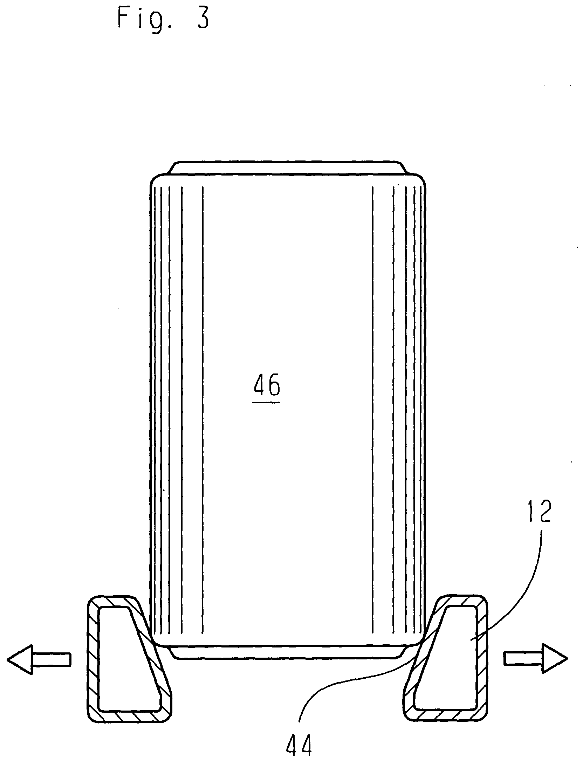

In der in Figur 3 dargestellten Einzelheit ist zu sehen, dass die Glieder der Kette 12 an ihrer oberen, inneren Kante mit einer Einstellschräge 44 versehen sein können, die das Einstellen einer Getränkebüchse 46 erleichtert und eine Anformung der Kette 12 an Größe und Form der Getränkebüchse 46 bewirkt.

In den nachfolgend beschriebenen Ausführungsbeispielen der Erfindung sind für dieselben Teile mit Figuren 1 und 2 übereinstimmende Bezugszahlen verwendet.

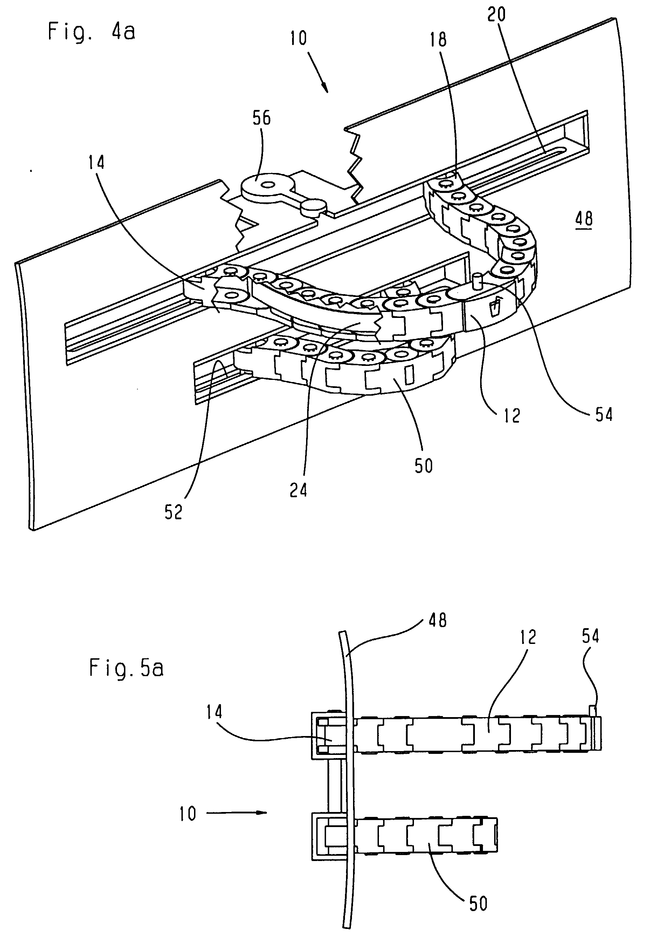

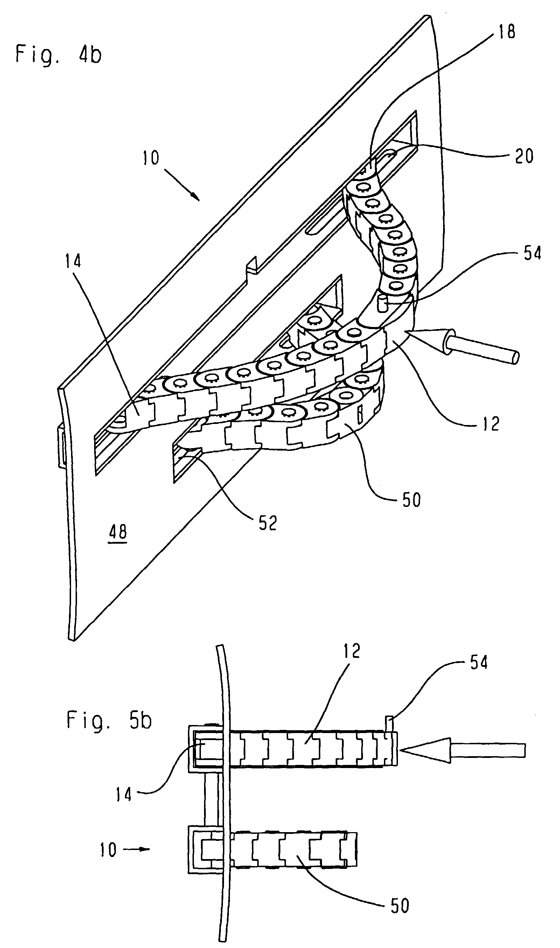

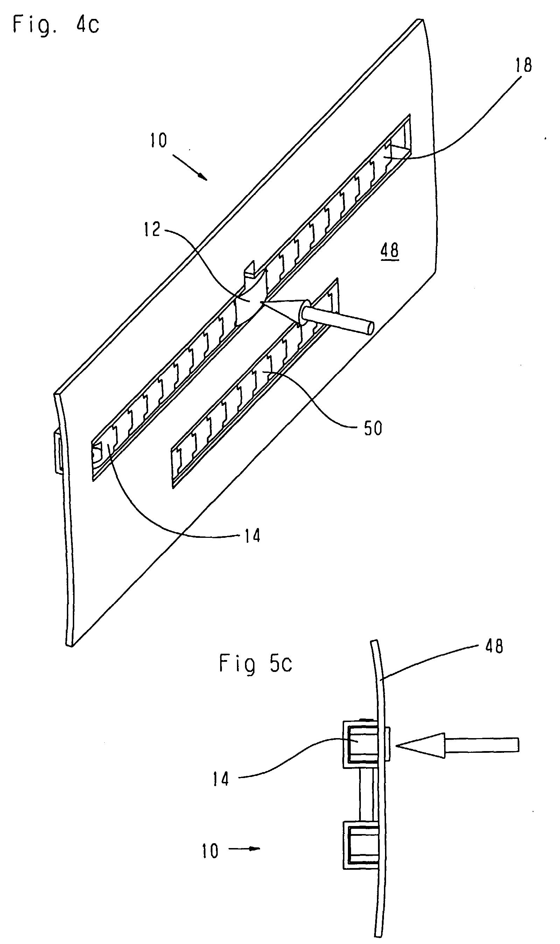

Das in Figuren 4 und 5 dargestellte Ausführungsbeispiel der Erfindung weist ebenfalls eine Kette 12 auf, die von einer in Gliedern der Kette 12 einliegenden Blattfeder 24 zu einem Bogen geformt werden. Die beiden Endglieder 14, 18 der Kette 12 sind schwenk- und in entgegengesetzten Richtungen verschiebbar in einer Führung 20, bspw. in einer Tür- oder Innenverkleidung 48 geführt. In der Gebrauchsstellung steht die Kette 12 wie in Figuren 4a und 5a zu sehen, bogenförmig in einer horizontalen Ebene von der Innenverkleidung 48 ab.

Unterhalb der Kette 12 ist eine zweite, ebensolche, jedoch kürzere Kette 50 mit ihren beiden Enden in einer Führung 52 verschiebbar in der Innenverkleidung 48 geführt. Diese zweite Kette 50 bildet eine Stütze für einen nicht dargestellten, in die obere Kette 12 eingestellten Getränkebehälter. Bei Nichtgebrauch wird die Kette 12 in ihrer Mitte in Richtung der Innenverkleidung 48 gedrückt, wodurch sich die Endglieder 14, 18 der Kette 12 voneinander entfernen und die Kette 12 gestreckt in der Innenverkleidung 48 zu liegen kommt. Zur Verriegelung weist ein mittleres Glied der Kette 12 einen Verriegelungszapfen 54 auf, mit dem es in einer an sich bekannten, sog. Push-Push- oder HerzkurvenVerriegelungseinrichtung 56 verriegelt sind. Zum Gebrauch wird kurz gegen das mittlere Glied der Kette 12 gedrückt, wodurch die Verriegelungseinrichtung 56 entriegelt wird und die Kette 12 durch die Kraft ihrer Blattfeder 24 in die in Figuren 4a und 5a dargestellte, bogenförmige Stellung gelangt. Die die Stütze bildende Kette 50 wird bei Nichtgebrauch separat in die Innenverkleidung 48 hineingedrückt und verriegelt. Die Entriegelung erfolgt zusammen mit der oberen Kette durch Drücken gegen deren mittleres Kettenglied.

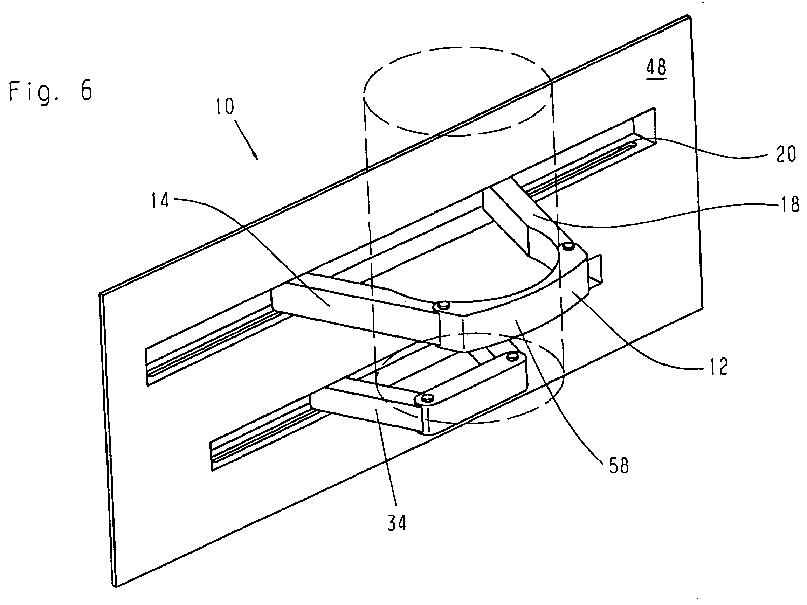

Die in Figur 6 dargestellte, erfindungsgemäße Haltevorrichtung 10 weist eine dreigliedrige Kette 12 auf, die einen eingestellten, nicht dargestellten Getränkebehälter umschließt. Dabei umfassen zwei Endglieder 14, 18 den eingestellten Getränkebehälter an einander gegenüberliegenden Seiten, wobei die beiden Endglieder 14, 18 von einem Mittelglied 58 verbunden werden. Das eine Endglied 14 ist um eine vertikale Achse schwenkbar in einer Innenverkleidung 48 eines Kraftwagens gelagert, das andere Endglied 18 ist schwenk- und verschiebbar in einer Führungsnut 20 in der Innenverkleidung 48 geführt. Als Stütze 40 ist unterhalb der Kette 12 eine zweite, ebensolche, allerdings kleinere Kette angeordnet. Die Funktion der Haltevorrichtung 10 aus Figur 6 entspricht der Haltevorrichtung 10 aus Figuren 4 und 5, zur Vermeidung von Wiederholungen wird insoweit auf die entsprechenden Erläuterungen verwiesen.

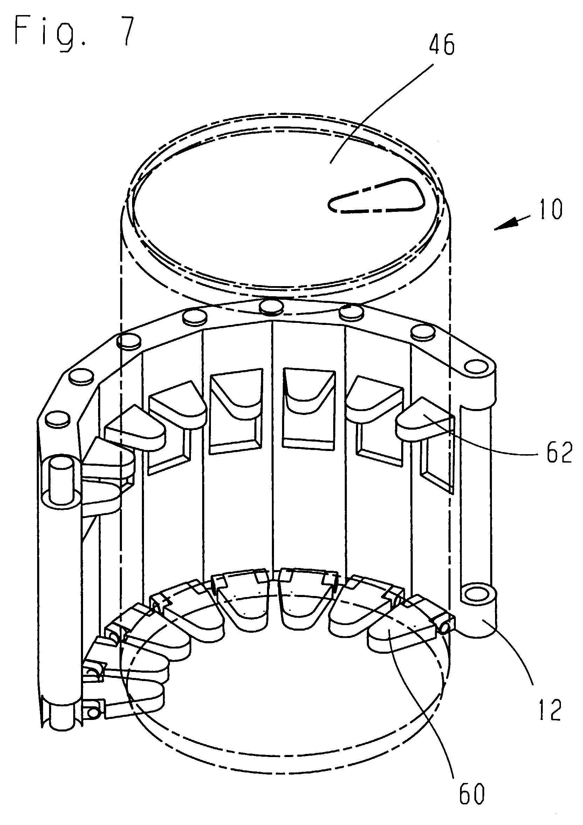

Figur 7 zeigt eine weitere Ausbildungsmöglichkeit einer erfindungsgemäßen Haltevorrichtung 10. Dargestellt ist in Figur 7 lediglich die Kette 12. Die Glieder der Kette 12 sind höher, sie haben bspw. eine Höhe, die in etwa einer halben Höhe einer einstellbaren Getränkebüchse 46 entspricht. Unten an den Gliedern der Kette sind Stützen 60 für die Getränkebüchse 46 in Form dreiecksförmiger Zungen 60 schwenkbar angebracht. In einem oberen Bereich der Glieder der Kette 12 sind ebenfalls dreiecksförmige Ausgleichaklappen 62 angebracht. Die Ausgleichsklappen 62 sind nach innen schwenkbar, sie weisen innerhalb der hohlen Glieder der Kette 12 einen nicht sichtbaren, rechtwinkligen Fortsatz auf an dem sie von der in den Gliedern einliegenden, in Figur nicht sichtbaren Blattfeder 24 nach innen geschwenkt werden.

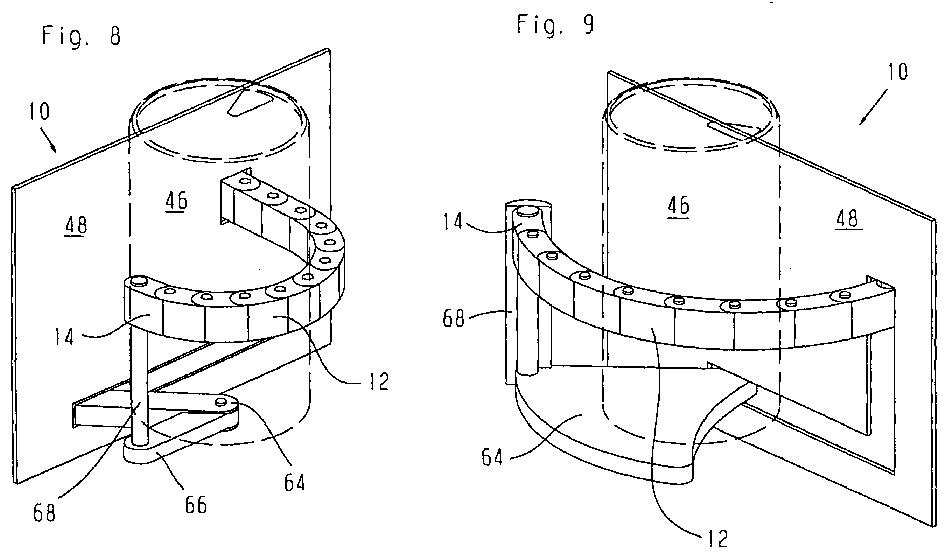

Figur 8 zeigt eine weitere Ausführungsform einer erfindungsgemäßen Haltevorrichtung 10. Diese weist als Stütze für eine in die Haltevorrichtung einstellbare Getränkebüchse 46 einen um eine vertikale Achse schwenkbaren Hebel 64 auf, der von einer Innenverkleidung 48 eines Kraftwagens nach innen verschwenkbar ist. Am Schwenkhebel 64 ist ein zweiter Schwenkhebel 66 um eine vertikale Achse schwenkbar angelenkt. Vom zweiten Schwenkhebel 66 steht ein Stift 68 senkrecht nach oben, an dem ein Endglied 14 der die Getränkebüchse 46 umschlingenden Kette 12 angebracht ist. Beim Verschwenken der beiden Schwenkhebel 64, 66 aus einer in der Innenverkleidung 48 versenkten Grundstellung in die in Figur 8 dargestellte Gebrauchsstellung führen die beiden Schwenkhebel 64, 66 die Kette 12 bogenförmig aus der Innenverkleidung 48 heraus.

Bei der in Figur 9 dargestellten Ausführungsform der Erfindung ist der Schwenkhebel 64 zu einem Kreissegment verbreitert, wodurch sich der zweite Schwenkhebel 66 erübrigt und das Endglied 14 der Kette 12 über den Stift 68 direkt am Schwenkhebel 64 angebracht ist.

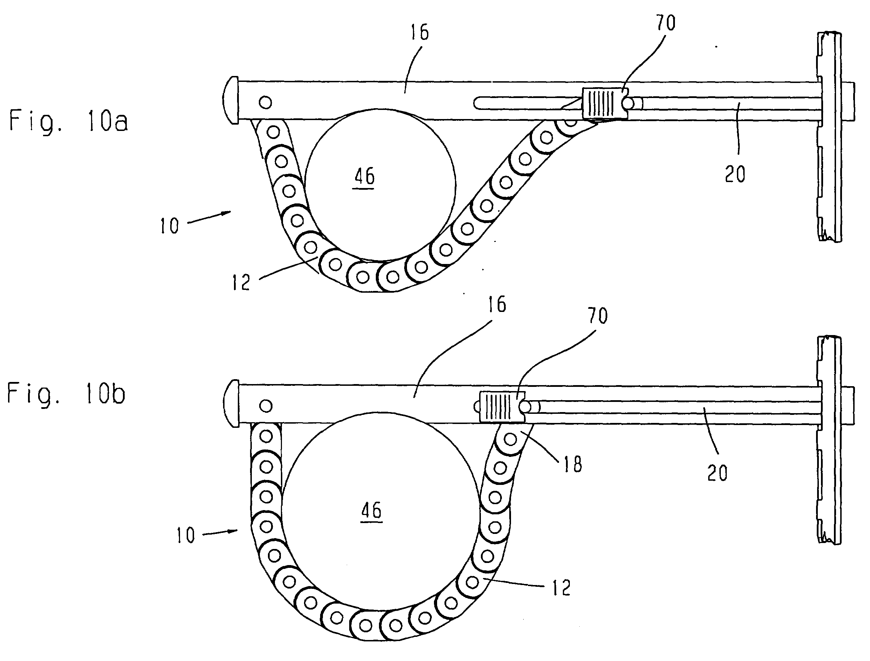

Figuren 10a und 10b zeigen eine abgewandelte Ausführungsform der in Figuren 1 und 2 dargestellten, erfindungsgemäßen Haltevorrichtung 10 in Draufsicht. Hier ist in den Führungsschlitz 20 des Schiebers 16 ein Anschlag 70 eingesetzt. Der Anschlag 70 hält hemmend am Schieber 16, er ist gegen seine Klemmkraft verschiebbar. Die Klemmkraft ist so groß, dass die Blattfeder 24 (Figur 1) der Kette 12 den Anschlag 70 nicht verschiebt. Der Anschlag begrenzt den Schiebeweg des Endglieds der Kette 12 am Schieber 16. Durch Verstellen des Anschlags 70 lässt sich die Kette 12 auf unterschiedliche Durchmesser von Getränkebehältern 46 einstellen, wie ein Vergleich der Fig. 10a und 10b zeigt. Da das Endglied 16 der Kette 12 im Führungsschlitz 20 in Richtung des Armaturenbretts 28 frei verschiebbar ist, funktionieren das Ein- und Ausfahren des Schiebers 16 und das bogenförmige Ausstellen der Kette 12 wie zu Figuren 1a bis 1c beschrieben.

## Patentansprüche

1. Haltevorrichtung für einen Getränkebehälter in einem Kraftwagen, **dadurch gekennzeichnet**, dass die Haltevorrichtung (10) eine Kette (12) aufweist, deren Glieder um Gliedachsen schwenkbar miteinander verbunden sind, wobei die Kette (12) einen in die Haltevorrichtung (10) einstellbaren Getränkebehälter (46) zumindest auf einem Teil seines Umfangs umschlingt.

2. Haltevorrichtung nach Anspruch 1, **dadurch gekennzeichnet**, dass die Haltevorrichtung (10) eine Führung (20) aufweist, mit der ein Glied (18) der Kette verschiebbar geführt ist.

3. Haltevorrichtung nach Anspruch 1, **dadurch gekennzeichnet**, dass die Kette (12) wenigstens ein Federelement (24) aufweist, das die Glieder der Kette (12) gegeneinander verschwenkt.

4. Haltevorrichtung nach Anspruch 3, **dadurch gekennzeichnet**, dass die Haltevorrichtung (10) ein Federelement (24) aufweist, das sich in Längsrichtung der Kette (12) erstreckt und das an Gliedern der Kette (12) angreift.

5. Haltevorrichtung nach Anspruch 2, **dadurch gekennzeichnet**, dass die Haltevorrichtung (10) eine Gleitschiene (32) aufweist, die an einer Stelle schwenkbar mit einem Glied (18) der Kette (12) verbunden und an einer davon beabstandeten anderen Stelle schwenk- und verschiebbar in einer Führung (16) geführt ist, wobei die geführte Stelle der Gleitschiene (32) Abstand von dem geführten Glied (18) der Kette (12) aufweist.

6. Haltevorrichtung nach Anspruch 1, **dadurch gekennzeichnet**, dass Glieder der Kette (12) eine Einstellschräge (44) aufweisen.

7. Haltevorrichtung nach Anspruch 2, **dadurch gekennzeichnet**, dass die Haltevorrichtung (10) eine Auszieheinrichtung (16) aufweist, mit der die Führung (20) aus einer Nichtgebrauchsstellung in eine Gebrauchsstellung und umgekehrt verbringbar ist.

8. Haltevorrichtung nach Anspruch 1, **dadurch gekennzeichnet**, dass die Haltevorrichtung (10) eine Stütze (34; 50; 60; 64, 66) aufweist, auf der ein in die Haltevorrichtung (10) eingestellter Getränkebehälter (46) steht.

9. Haltevorrichtung nach Anspruch 8, **dadurch gekennzeichnet**, dass die Stütze (34; 50) eine Kette (36, 38, 40) aufweist, deren Glieder um Gliedachsen schwenkbar miteinander verbunden sind.

10. Haltevorrichtung nach Anspruch 1, **dadurch gekennzeichnet**, dass die Haltevorrichtung (10) eine Führung (52) aufweist, mit der ein Glied der Kette (34; 50) der Stütze verschiebbar geführt ist.

11. Haltevorrichtung nach Anspruch 9, **dadurch gekennzeichnet**, dass ein Glied (38) der Kette (40) der Stütze (34) mit einem Glied (18) der ein in die Haltevorrichtung (10) eingestellten Getränkebehälter (46) umschlingenden Kette (12) verbunden ist.

12. Haltevorrichtung nach Anspruch 1, **dadurch gekennzeichnet**, dass Glieder der Kette (12) schwenkbare Stützen (60) für einen in die Haltevorrichtung (10) eingestellten Getränkebehälter (46) aufweisen.

13. Haltevorrichtung nach Anspruch 1, **dadurch gekennzeichnet**, dass die Haltevorrichtung (10) einen Schwenkhebel (64, 66) aufweist, der eine Stütze für einen in die Haltevorrichtung (10) eingestellten Getränkebehälter (46) bildet und der zugleich eine Bogenführung für ein freies Endglied (14) der Kette (12) bildet.

14. Haltevorrichtung nach Anspruch 2, **dadurch gekennzeichnet**, dass die Haltevorrichtung (10) eine Feststelleinrichtung (70) aufweist, mit der das mit der Führung (20) geführte Glied (18) der Kette (12) an der Führung (20) feststellbar ist.
